Europäisches Patentamt

European Patent Office

Office européen des brevets

(19)

(11) Veröffentlichungsnummer: **0 259 706**
**B1**

(12) **EUROPÄISCHE PATENTSCHRIFT**

(45) Veröffentlichungstag der Patentschrift:
18.04.90

(21) Anmeldenummer: 87112433.5

(22) Anmeldetag: 27.08.87

(51) Int. Cl.⁴: **B29C 67/22,** B29C 35/08
// B29K33:00

(54) **Verfahren zur Herstellung eines Hartschaumstoffes mittels eines Mikrowellen- oder Hochfrequenzfeldes.**

(30) Priorität: 11.09.86 DE 3630930

(43) Veröffentlichungstag der Anmeldung:
16.03.88 Patentblatt 88/11

(45) Bekanntmachung des Hinweises auf die Patenterteilung:
18.04.90 Patentblatt 90/16

(84) Benannte Vertragsstaaten:
DE ES FR GB NL SE

(56) Entgegenhaltungen:
DE-A- 1 817 156
GB-A- 2 134 845
US-A- 3 906 137
US-A- 4 499 036

(73) Patentinhaber: Röhm GmbH, Kirschenallee
Postfach 4242, D-6100 Darmstadt 1(DE)

(72) Erfinder: Pip, Wolfgang, Büschelstrasse 15,
D-6100 Darmstadt-Eberstadt(DE)

## Beschreibung

Die Erfindung betrifft ein Verfahren zur Herstellung eines Hartschaumstoffes durch Erhitzen eines in der Hitze schäumbaren harten organischen Kunststoffes mittels eines den Schäumvorgang auslösenden Mikrowellen- oder Hochfrequenzfeldes bzw. einer solchen Strahlung. Die Erfindung betrifft insbesondere das Aufschäumen von Kunststoffen, die ein zu wenigstens 80 Gew.-% aus Einheiten der Acryl- oder Methacrylsäure und das Acryl- oder Methacrylnitrils aufgebaute Mischpolymerisat und ein Treibmittel enthalten. Beim Erhitzen entstehen aus den Säure- und Nitrilgruppen Acryl- bzw. Methacrylimideinheiten.

## Stand der Technik

G. Menges, G. Hahn und H. Reichstein beschreiben im PLASTVERARBEITER, Bd. 34, 1983, S.1488-92, die Herstellung eines vernetzten Polyäthylen-Schaumstoffes. Polyäthylen-Formmasse wird zusammen mit Treib- und Vernetzungsmitteln in einem Extruder aufgeschmolzen und homogenisiert, zu einem Strang extrudiert und mittels einer Mikrowellenstrahlung bis zum Aufschäumen erhitzt. Bei diesem Verfahren entspricht es der Wirtschaftlichkeit, den Strang nach der Extrusion nicht abzukühlen, sondern unmittelbar der Mikrowellenstrahlung auszusetzen.

Die Herstellung von Hartschaumstoffen, beispielsweise von Polymethacrylimid-Schaumstoffen, durch Erhitzen einer harten Tafel aus einem beim Erhitzen schäumbaren Kunststoff ist aus der DE-PS 1 817 156 bekannt. Die Tafel wird in einem Wärmeschrank auf die Schäumtemperatur erhitzt, was wegen der geringen Wärmeleitfähigkeit von organischen Kunststoffen ein langwieriger Vorgang ist. Aus der DE-OS 33 04 882 ist es auch schon bekannt, einen Polymethacrylimid-Schaumstoff durch Mikrowellen zu erhitzen, um ein weitere Ausdehnung des Schaumstoffes hervorzurufen.

## Aufgabe und Lösung

Versuche, das Aufschäumen einer harten Tafel aus einem in der Hitze schäumbaren Kunststoff durch Einwirkung von Mikrowellen anstelle eines Wärmeschrankes auszulösen, erwiesen sich als erfolglos. Zwar wird erwartungsgemäß die Tafel in ihrer ganzen Dicke gleichzeitig erwärmt, sofern sie die erforderlichen Mikrowellenabsorptionseigenschaften besitzt, jedoch entsteht stets ein unregelmäßig geborstener Körper statt der erwünschten Schaumstofftafel. Als Ursache wurde der frühzeitige Beginn des Schäumens im Innern der Tafel festgestellt, so daß die äußeren Bereiche platzen und aufreißen. Diese Gefahr besteht bei weichen und zähen Kunststoffen nicht.

Es wurde gefunden, daß man im Mikrowellen- oder Hochfrequenzfeld gleichmäßige Schaumstofftafeln erhält, wenn man eine harte Tafel des schäumbaren Kunststoffes vorerhitzt, bis wenigstens ein Teil seiner Oberfläche die Erweichungstemperatur erreicht oder überschritten hat, und danach das den Schäumvorgang auslösende Mikrowellen- oder Hochfrequenzfeld bis zur Aufschäumung einwirken läßt. Wesentlich ist, daß nicht eher eine solche Mikrowellen- oder Hochfrequenzleistung auf die schäumbare Kunststofftafel einwirkt, die den Beginn des Schäumvorgangs auslöst, als bis wenigstens ein Teil der Oberfläche thermisch erweicht ist. Die Art der Erwärmung spielt keine Rolle, solange diese Voraussetzung erfüllt ist. Wenn die Vorwärmung mittels eines Mikrowellen- oder Hochfrequenzfeldes durchgeführt wird, muß dessen Stärke so bemessen sein, daß noch keine Schäumung eintritt. Erst wenn die Oberfläche erweicht, kann die Leistung des Feldes so gesteigert werden, daß der Schäumvorgang beginnt. Der entstehende Schaum verformt die erweichte Oberfläche kissenförmig. In dem Maße, wie die Erweichung der Oberfläche fortschreitet, werden weitere Bereiche der Kunststofftafel unter Volumenzunahme geschäumt, bis die ganze Tafel in einem Schaumstoffkörper übergegangen ist. Durch die thermische Erweichung der Oberfläche ist gewährleistet, daß der Kunststoffkörper dem Schäumvorgang folgen kann, ohne daß durch den Schäumdruck zu örtlichen Spannungen kommt, die zum Bruch des Kunststoffes führen würden. Sobald derartige Brüche auftreten, ist die Ausbildung einer gleichmäßigen Schaumstofftafel in der Regel nicht mehr möglich.

## Ausführung der Erfindung

Es ist nicht erforderlich, daß beim Beginn des Schäumvorganges bereits die ganze Oberfläche der Kunststofftafel erweicht ist, sofern eine zusammenhängende Zone thermisch erweichten Materials sich von der Oberfläche bis zu dem Bereich des Schäumbeginns erstreckt. Diese Voraussetzung wird in der Praxis immer erfüllt sein, weil die Kunststofftafel in der Umgebung der erweichten Oberflächenzone der Schäumtemperatur am nächsten ist, so daß sie dort bei der Einwirkung des Mikrowellen- bzw. Hochfrequenzfeldes zuerst erreicht wird. In der gleichen Weise hält die Ausdehnung des erweichten Oberflächenbereichs mit der fortschreitenden Schäumung Schritt, bis schließlich die gesamte Oberfläche erweicht ist. Von diesem Zeitpunkt an ist die Gefahr der Bildung von Spannungsbrüchen ausgeschlossen. Der Schäumvorgang setzt sich ungehindert bis zur vollständigen Aufschäumung der ganzen Tafel fort.

Als Erweichungstemperatur wird die Temperatur angesehen, bei der sich der Kunststoff unter der Einwirkung des Schäumdruckes elastisch dehnt, ohne zu brechen. Die Temperatur, bei der dieser Zustand eintritt, kann überschritten werden, jedoch soll der Temperaturbereich der plastischen Verformbarkeit möglichst nicht erreicht werden.

Zum Vorerhitzen der schäumbaren Kunststofftafel ist jede Wärmequelle verwendbar, mit der die Erweichungstemperatur an der Oberfläche erreicht werden kann. Geeignet ist z.B. ein Wärmeschrank, in welchem eine entsprechende erhitzte Atmosphäre, in der Regel Luft, auf die Oberfläche der Tafel einwirkt. Ebenso kann man eine Wärmestrahlung auf die Oberfläche einwirken lassen. Die Erhitzung durch Wärmeübertragung von einem flüssigen Medium oder einer heißen Festkörperfläche ist ebenfalls möglich, aber meistens weniger zweckmäßig.

Wie oben erwähnt, können Mikrowellen- oder Hochfrequenzfelder allein oder zusammen mit den genannten Wärmequellen zur Vorerhitzung angewandt werden, wenn sichergestellt wird, daß der Schäumvorgang nicht vorzeitig im Innern ausgelöst wird. Zu diesem Zweck Können Felder von entsprechend geringer Stärke zur Anwendung kommen oder man läßt das Feld nur kurzzeitig oder intermittierend einwirken. Wenn die Erweichungstemperatur und die Temperatur des Schäumbeginns dicht beieinanderliegen, ist es schwierig, das Mikrowellen- oder Hochfrequenzfeld so zu dosieren, daß die Schäumtemperatur im Innern nicht vor der Erweichung der Oberfläche erreicht wird. Man läßt daher vorzugsweise zusätzlich eine der genannten anderen Wärmequellen unmittelbar auf die Oberfläche wirken.

Sobald ein Teil der Oberfläche die Erweichungstemperatur erreicht hat, kann das zur Auslösung des Schäumvorgangs geeignete Mikrowellen- oder Hochfrequenzfeld zur Einwirkung kommen. Vorzugsweise geschieht dies erst, wenn die Oberfläche der Kunststofftafel vollständig oder nahezu vollständig die Erweichungstemperatur erreicht oder überschritten hat. Es ist unschädlich, wenn der Schäumvorgang an der Oberfläche bereits einsetzt. Die weitere Erhitzung auf die Schäumtemperatur tritt schneller als mit jeder anderen, nur von außen wirkenden Wärmequelle ein.

Mikrowellenöfen, die sich für Verfahren der Erfindung eignen, sind bekannt und werden beispielsweise für Trocknungsverfahren eingesetzt. Sie arbeiten mit Wellenlängen im Bereich von 1 bis 50 cm. Die gebräuchlichste Wellenlänge beträgt 12,3 cm entspr. 2450 MHz. Die Strahlung bzw. das Feld wird durch ein sog. Magnetron erzeugt und in dem Mikrowellenofen möglichst gleichmäßig verteilt. Je gleichmäßiger das Feld ist, um so geringer ist die Gefahr, daß sich isolierte Schäumzonen bilden, die nicht mit einer erweichten Oberflächenzone in Verbindung stehen. Hinsichtlich des Aufbaus und des Betriebs von Mikrowellenerzeugern sei auf die einschlägige Literatur verwiesen; vgl. H. Püschner, "Wärme durch Mikrowellen", Philips Technische Bibliothek, 1964; G. Nimtz, "Mikrowellen", Carl Hanser Verlag, 1980. Es versteht sich von selbst, daß die Leistung des Mikrowellenerzeugers der Größe der aufzuschäumenden Kunststofftafel und der erforderlichen Schäumtemperatur angemessen sein muß.

Hochfrequenzgeneratoren, die sich für das Verfahren der Erfindung eignen, arbeiten bei Wellenlängen von 1 bis 50 m. Einegebräuchliche Wellenlänge ist 11 m entspr. 27,12 MHz. Sie werden zum Schweißen von kunststoffen und zum Aufschäumen von befeuchteten Polystyrolperlen eingesetzt (Vgl. "Kunststoff-Physik im Gespräch", Firmenschrift der BASF AG, 1969, S. 179). Auch hier ist eine möglichst gleichmäßige Feldverteilung vorteilhaft. Das Erhitzen eines Stoffes im Mikrowellen- oder Hochfrequenzfeld setzt voraus, daß der Stoff die entsprechende Strahlung absorbiert. Das ist der Fall, wenn der Stoff ausreichende Anteile an polaren Strukturen aufweist. Solche Strukturen können Bestandteil der Polymermoleküle sein, aus denen der Kunststoff aufgebaut ist, oder sie können in beigemengten niedermolekularen Stoffen, beispielsweise Wasser oder Formamid, enthalten sein. Kunststoffe mit polaren Strukturen sind z.B. solche, die Carbonyl-, Carboxyl-, Hydroxyl-, Halogen-, Amino- oder Carbonamidogruppen enthalten.

Dem Verfahren der Erfindung sind besonders solche Kunststoffe zugänglich, die ein zu wenigstens 80 Gew.% aus Einheiten der Acryl- oder Methacrylsäure und des Acryl- oder Methacrylnitrils aufgebautes Mischpolymerisat und ein beim Erhitzen gas- bzw. dampfbildendes Treibmittel enthalten. Geeignete Treibmittel sind z.B. Formamid, Monomethylformamid, Harnstoff, Wasser, niedere aliphatische Alkohole. Diese Kunststoffe erweichen bei 140 bis 150 Grad C und beginnen bei 160 bis 180 Grad C zu schäumen. Gleichzeitig findet eine Umsetzung von polymersierten Einheiten des Acryl- oder Methacrylnitrils und solchen der Acryl- oder Methacrylsäure zu Einheiten des Acryl- bzw. Methacrylimids statt. Schaumstoffe auf Basis von Polymethacrylimid haben besondere technische Bedeutung erlangt.

Tafeln aus einem derartigen Kunststoff von beispielsweise 1 bis 4 cm Dicke werden zweckmäßig in einem Wärmeschrank mit Luftumwälzung bei 170 bis 200 Grad C bis zur Erweichung der Oberfläche erhitzt und dann einem Mikrowellenfeld ausgesetzt. Die Vorerhitzung dauert in der Regel etwa 5 bis 50 min, die Mikrowellenbehandlung etwas kürzer. Demgegenüber wird bei alleiniger Schäumung mittels Warmluft eine Schäumzeit von etwa 2 Stunden benötigt.

BEISPIELE

Beispiel 1

Schäumen im Mikrowellenfeld

Zur Herstellung einer Platte aus Polymethacrylimid-Schaumstoff wurde eine Platte mit den Abmessungen 70 × 70 × 23 mm aus einem harten schäumbaren Kunststoff mit einer Erweichungstemperatur von 160 Grad C, ehthaltend ein Mischpolymerisat aus Methacrylsäure und Methacrylnitril im Molverhältnis 3 : 2 und 8 %, bez. auf das Polymerisatgewicht, eines aus Formamid und tert. Butanol bestehenden Treibmittelgemisches, in einem Heißluftofen innerhalb 30 min auf eine etwa gleichmäßige Oberflächentemperatur von 160 Grad C vorgewärmt und danach 6 min lang mit einem Mikrowellenfeld behandelt, dessen Leistung durch einen Arbeitszyklus von jeweils 10 sec Strahlungszeit und 50 sec Pausenzeit geregelt wurde. Es entstand ein Schaumstoffblock mit einer Dichte von 38 kg/cbm.

Der verwendete Mikrowellenofen (Sharp, Modell R 8000 E) hatte eine Leistungsaufnahme von 1,4 kW im Heißluftteil und von 1,3 kW im Mikrowellenteil mit einer Leistungsabgabe von 650 W bei 2 l Wasserbelastung und war so umgerüstet, daß Mikrowellen- und Heißluftbetrieb gleichzeitig möglich waren. Dadurch konnte das gesamte Schäumverfahren in der gleichen Anlage durchgeführt werden, indem während der Vorheizzeit nur mit Heißluft gearbeitet und zur Aufschäumung die Mikrowellenheizung hinzugeschaltet wurde.

Beispiel 2

Schäumen im Hochfrequenzfeld

Zur Herstellung einer Platte aus Polymethacrylimidschaumstoff wurde eine Platte mit den Abmessungen 120 × 120 × 23 mm aus einem harten schäumbaren Kunststoff mit einer Erweichungstemperatur von 180 Grad C, enthaltend ein Schwach vernetztes Mischpolymerisat aus gleichen Molteilen Methacrylnitril und Methacrylsäure und 10 %, bez. auf das Polymerisatgewicht, eines Treibmittelgemisches aus Formamid und tert. Butanol, in einem Heißluftofen in 30 min auf eine etwa gelichmäßige Oberflächentemperatur von 180 Grad C vorgewärmt.

Zur Aufschäumung wurde die vorgewärmte Platte zwischen die Elektroden eines Hochfrequenzofens (Modell HGV 4001 der Firma Herfurth GmbH.) mit einer Nutzleistung von 4 kW bei einer Frequenz von 27,12 MHz gelegt. Die Elektroden hatten eine Größe von 400 × 400 mm. Zur Fokussierung des elektrischen Feldes wurden auf die Flächen der vorgewärmten Platte zwei auf die gleiche Temperatur vorgewärmte Formelektroden aus Aluminium mit einer Größe von 80 × 80 × 10 mm und abgerundeten Ecken aufgelegt. Der Schäumprozeß wurde mit einer Stromstärke von 0,4 A eingeleitet und nach 5 min beendet. Es war ein Schaumstoffblock mit einer Dichte von 48 kg/cbm entstanden

## Patentansprüche

Verfahren zur Herstellung eines Polyacrylimid- oder Polymethacrylimid-Hartschaumstoffes durch Erhitzen eines in der Hitze schäumbaren, harten organischen Kunststoffes, der ein zu wenigstens 80 Gew.-% aus Einheiten der Acryl- oder Methacrylsäure und des Acryl- oder Methacrylnitrils aufgebautes Mischpolymerisat und ein beim Erhitzen gas- bzw. dampfbildendes Treibmittel enthält, mittels eines den Schäumvorgang auslösenden Mikrowellen oder Hochfrequenzfeldes, dadurch gekennzeichnet, daß man eine harte Tafel des schäumbaren Kunststoffes vorerhitzt, bis wenigstens ein Teil ihrer Oberfläche die Erweichungstemperatur erreicht oder überschritten hat, und danach das den Schäumvorgang auslösenden Mikrowellen- oder Hochfrequenzfeld bis zur Aufschäumung einwirken läßt.

## Claims

Process for the preparation of a polyacrylimide rigid foam or polymethacrylimide rigid foam by heating a rigid organic plastic which can be foamed by heating and which contains a mixed polymer composed of at least 80 wt.% of units of acrylic acid or methacrylic acid and of acrylonitrile or methacrylonitrile and a foaming agent which forms steam or gas on heating, by means of a microwave field or a highfrequency field which triggers the foaming process, characterised in that a rigid slab of the foamable plastic is pre-heated until at least a part of its surface has reached the softening temperature or has exceeded it, and then the microwave field or highfrequency field which triggers the foaming process is allowed to act until foaming commences.

## Revendications

Procédé de préparation d'une mousse rigide de polyacrylimide ou de polyméthacrylimide par chauffage d'une matière plastique organique dure, qui peut donner un produit mousse à la chaleur et qui contient un copolymère composé pour 80% en poids au moins d'unités de l'acide acrylique ou méthacrylique et de l'acrylo- ou mèthacrylonitrile, ainsi qu'un porogène produisant des gaz ou des vapeurs au chauffage, au moyen d'un champ de micro-ondes ou à haute fréquence qui déclenche le processus de moussage, caractérisé en ce qu'on préchauffe un panneau dur de la matière plastique qui peut donner un produit mousse, jusqu'à ce qu'une partie au moins de sa surface ait atteint ou dépasse la température de ramollissement, puis on fait agir jusqu'à la formation de mousse le champ de micro-ondes ou à haute fréquence qui déclenche le processus de moussage.